Europäisches Patentamt

European Patent Office

Office européen des brevets

(19)

(11) Publication number: **0 131 548**
A2

(12)

# EUROPEAN PATENT APPLICATION

(21) Application number: **84830171.9**

(22) Date of filing: **05.06.84**

(51) Int. Cl.⁴: **A 47 J 43/046**
**A 47 J 43/06**

(30) Priority: **06.06.83 IT 3162083 U**
**06.06.83 IT 4200583**
**06.06.83 IT 4200683**
**06.06.83 IT 4200783**
**06.06.83 IT 4200883**

(43) Date of publication of application:
**16.01.85 Bulletin 85/3**

(84) Designated Contracting States:
**AT BE CH DE FR GB IT LI LU NL SE**

(71) Applicant: **Gagliani, Guiseppe**
**Viale Ugo la Malfa 10126**
**I-90147 Palermo(IT)**

(72) Inventor: **Gagliani, Guiseppe**
**Viale Ugo la Malfa 10126**
**I-90147 Palermo(IT)**

(54) **Electric household food processor for kneading, cutting, beating.**

(57) Electrichousehold appliance "Food Processor" to help the housewife to elaborate food, make creams, kakes and to be used for other domestic appliances. A kitchen robot composed of a motor body (a) with a tool box and a vane to store the cable, a cup (F) to be attached in both senses, a lid (picture 6) sealing and at the same time moving, which controls the starter device (8) an induction motor at 1400 revs. It is characterized by the possibility to work any food, squeeze out juice and pulp and strain tomatoes without changing speed of the engine revs because the knife to be attached, is adjustable at different heights and by a device to squeeze out juices (picture 7-8) which work both with centrifugal force and pressing the food to be squeezed through the device (Picture 7 p) put on the lid, (picture 7) which work on the basket walls (picture 8 - s). Furthermore the appliance has some disks with quik coupling (picture 2 - 3) working from both sides. It is also composed of an attachment (picture 10) to make candy flow through a friction plate or a friction plate plus resistances; of a drawing machine (picture 11) which works coaxially to the gravity force and produces doughs; of a device, which connected to be engine of the food processor grinds coffee and vegetables and finally (picture 12) of a flange (U) carryng a flexible axle, attached in the place of the cup. To its end it is possible to attach different tools to polish, brush and clean also in immersion.

Electric household appliance " Food Processor " to help the
housewife to elaborate food kakes, creams ect.

The invention concerns a food processor to elaborate   food.
It consists of an engine , a tool box, a cup, a lid, a pestle with its lid and some attachments and tools, which are to
be assembled inside the cup for different utilizations such
as:

1) a rotary blade or knife;

2) extensions to assemble the disks with the axle of the engine;

3) some disks to insert on the extensions;

4) a basket and a different lid, with a peculiar device named
   appliance to squeeze juice and pulp out of food or fruit;

5) an attachment to grind coffee, spices, sugar, corn, mais,
   dried fruits and any dried food which is to be ground and
   not minced;

6) a device to make candy flow, melted through an electric
   resistance or through heath produced by friction.It consists of a central body to elaborate the sugar and a large
   container to be inserted instead of the cup;

7) a device to squeeze citrus fruits, consisting of a flange
   to be inserted in the place of the lid and of a central
   body turning very slowly owing to a speed reducer between
   the flange and the axle of the engine;

8) a device to draw doughs. It consists of a cylinder with a
   suitable feed Box, within which a  screw turns, moved, throu
   gh, gears, by the axle of the engine and by a series of
   screw cutting dies, placed to obstruct the end of the cylinder toward which the screw works;

9) a device to clean and polish kitchen tools, consisting of a flange to insert instead of the cup, and of a flexible tube, joined to the axle of the engine , ending with rotating tools such as flannel disks, brushes and tools wich have a different movement but always useful to clean, polish or dust.

At present there are on the market some appliances, to help the housewife in the kitchen, which use a single engine to put in action different devices, which have a single utilization and help the housewife to elaborate food. These appliances ( old fashion kitchen robots ) are for example: mincer, grater, mixer, strainer ect.... everything put action by the same engine which is interchangeable. There are also some new robots ( food processor ) whose aim is that to have utilizations using a single engine and a single cup, changing the tools inside it. These food processor use, at present, induction engines ( long duration and reliability at low speed and with one, maximum two speeds ) or charcoal engines which have the peculiarity of a high speed with the possibility of varing it continually although the power is limited and they have short duration and low reliability. The present utilization of an induction motor, does not allow a food processor to use all the possible attachments , which need different speeds. On the other side the charcoal motor does not allow to exploit to the utmost all the attachments and it needs gears or belts or pulleys which endager its duration and its efficiency further on. From this we can say that a sudden rise in technology would be a food processor with an induction engine, which can elaborate any food and acts as a grater or a cream whipper indifferently , and fitted to exploit to the autmost every attachment.

The aim of the present invention is that of eliminating the disadvantages mentioned before, to improve the utilization of the existing attachments and create new ones which, at present, exist only as single machines. The advantage of the present invention is its need of a single speed: this owing to the peculiarity of the rotary blade ( see patent request N. 42005 - A/83 6th-June-1983 ) adjustable in a upper or lower position. In this way with a single speed, it is possible to knead ( blade in upper position ) or whip cream, mayonnese, eggs ( blade in lover position ). in this way we can use an induction motor, varing the height of the blade instead of the speed. As far as the elaboration of any food in general, it is not exposed to oxidation, because of the low speed. Now we are going to analyze the various components also referring to the patents by which they protected in Italy. We also indicate the numbers the patent requests.

1) Engine casing and tool box ( patent request n. 31620-B/83 6th-June-1983). At present there are on the market various kind of electric household appliances which operate in a assembled way, but most of them have not got particular devices such as the vane to store the cable, inside the engine casing, and a tool box to store the tools, which is attached to the casing. The advantage of the vane is the possibility to store the whole live wire while the appliance is not in use, or, during its usage , only part of it. The advantage of the tool box is a better harmony of shape of the appliance and the possibility to store, whithin reach the most used tools.

2) Apparatus to squeeze juice and pulp or only entirely out of fruit and vegetables with separation of the slags ( patent request n. 42009 - A/841st-June-1984 ). At present we know various kind of little electric household appliances which squeeze out juice and pulp. These use different shapes of baskets at different speeds, for example a conic basket and 10.000/20.000 revs per minute or a cylindric one 1400 revs per minute, but they squeeze only some and not all the available juice from fruit and vegetables. In fact, as far as the centrifuge at high speed is concerned, owing to the sloping basket and the high speed, the pulp will stay on the basket for a relatively short time. So, even if the holes will not be filled with pap, only little juice and very little pulp will be squeezed out. Further more, owing to the high speed, the enzymes of the vitamines and proteins contained in the food to be elaborated will be oxidated. As far as machine with cylindric basket, working at low speed, is concerned, even in this case the juice and the pulp will not be squeezed out entirely, owing to the low  speed and the long presence of the pup on the lateral sides of the basket. The pap will infact fill the holes from which the juice should come out.

In both cases the slags will be soaked with juice. The advantage of our apparatus to squeeze out juice and pulp is the particular device which allows to exploit the food entirely, leaving the slags completely dried. All this performed at low speed, which does not oxify the enzymes of the proteins and vitamines, leaving them integral. Further more our appliance is so versatile as to be used as a strainer for tomatoes.

3) Cup ( patent request n. 42006 A/83 6th June 1983 ) and lid ( Patent request n. 42008 A/83 6th June 1983 ).

The advantage of our machine is that its cup can be connected or disconnected, turning both right or left. The cup and its lid remain hermetically sealed even if, owing to special devices, they can turn. At present the other cups on the market are connected to the engine casing in various ways, such as bayonet joint or screw joint, but they can turn only in one way. Their lids can rotate and act as starters, but they cannot seal hermetically, or they can seal, but just because they can not rotate they do not act as starters. We also add that, at the ignition, obtained through a cane which moves a plastic stick, carrying at its end a little metal cylinder, this cylinder moves the relay which starts the engine.

4) System to clutch disks and extensions ( patent request n. 42007 A/83  6th-June-1983 ). At present the disks on the market may have an extension which form a single body with them, and may be used for a single operation. One of the advantages of our quick clutching, as the title says, is that it becomes easier to change the disk because there is no need to use screws, threadings, nuts ect. In this way, you need  not put the disk on the extension with no blocking, which if it is possible in some food processor without istanteneous brake, would be impossible in our machine, which has an istantaneous electronic brake. Moving the brake, in fact, the not blocked disk would come off. Our device represents a great advantage in space and cost compared with the other disks with incorporated extensions, usable from one side only. We also remind the adavantage of a special device which is just in the center of the disk and makes it possible to have at the same height the cutting surface of the disk, when it is used from the opposit side, while a different thikness of the hub in every disk makes   it possible to have the cutting surfaces of every disk all at the same level. This makes it possible to work the food with the least waste. At present there is nothing similar  on the market; in fact even if there are disks usable from both sides, which present no different height between the cutting surfaces of the sides owing to a peculiar device, there is no device which makes it possible to have the cutting surfaces at same height when you change disk. At present, in fact, food processors leave, changing the disks , different distances between every disk and the ending part of the feeding-box, so if for example we assemble a disk to obtain 8mm thick potatoes and then we assemble a disk to grate cheese, there are 8mm of not grated cheese left.

5) Apparatus to grind cereals, vegetables,coffee, dried fruits and any other dried food. There are different appliances to grind on the market. They consist of different parts and have small chances to diversify grinding. On the electrical household appliances market there are instruments to grind with little engines. The advantages of our attachment are a greater power and a greater diameter of the grinding wheels, which allow to grind any vegetable or cereal in considerable quantity and in a relatively short time, using the same feed box of the food processor to put the food in and the same cup of the food processor as container, trasforming in this way the food processor in a grinder of geat capacity.

6) Device to make candy flow. At present we only know quite big machines difficult to be used and quite expansive. There is no electrical household appliance to make candy flow on the market. The self evident newness is that of using a food processor to make candy flow through melting the sugar with a resistance working at low voltage ( and so without any danger, or melting the sugar by friction and through an electrical resistance, having in a little electrical hausehold appliance what is only possible with a specific industrial machine.

7) The citrus fruits squeezing apparatus does not offer any advantage compared with the other appliances on the market and we quote it only to show the versatility of our applian-ce.

8) Attachments to draw. As far as the drawing machines on the market are concerned the household appliances can only make a horizontal drawn daugh. The great advantage of our attachment is that of working industrially, making a vertical drawn daugh, without the deformation due to the force of gravity which is unovoidable in the horizontal drawn daugh. In our apparatus the drawn daugh comes out coaxially to the force of gravity, it is not subject to any deformation and allows to work softer doughs such as daughs with vegetables etc. With our device it is not only possible to have very long drawn doughs but also it is possible to draw doughs which need not to be very hard;it is so possible to obtaw very thin spaghetti.

9) Attachment to polish and clean kitchen tools and other tools. At present even it there are polishing machines for shoes, industrial machines to polish with emery and vacuum cleaners they are not household appliances. In fact there is not any little polishing machine which can be used various ways at home. Our device consists of a flange to be put in the place of the cup. In the middle of the flange there is a rotating and flexible arm to which it is possible to attach different tools. The advantage of our attachment is that it is possible both to dry-clean ( polishing furniture, shoes ect.) and to clean with detergent foams. It is possible to work in immersione to clean crokery, dishes, pottery etc. Another important advantage is the interchangeability of the tools; in fact to the end of the flexible arm it is possible to attach both disks made of brushes or flannel and tools which move with an alternate movement. The food processor is in this way transformed in a new and different appliance. Now we will follow a progressive order to indicate at least one of the different ways of using the various inventions, referring to the pictures.

1) We will explain the operating directions of a little hou-

0131548

sehold appliance ( see picture 1 ) composed of an outer casing the engine ( a ) with its axle sloping to the supporting base. In the casing there is vane to store the elettric cable and a tool box ( k), which can be attached or disattached to it, where the tools are to be stored; an eletrical induction engine powerful enough to fulfill every function it is useld for; four disks ( b) made of non toxic material, each of them usable from both sides owing to the particular kind of coupler ( c) male-female; with suitable shapings and dimensions as you can see in picture 2 and 3; a knife or rotary blade (d) as described in picture 4. It can be placed in two or three positions through the notoches ( j ) which are within its support, corrisponing to the one on the motor axle ( c); a cup ( f ) see picture 5, in plastic material, with the suitable shape of a conic section and possibly constructed with little lip (d) if you want dotated of a gate valve or similar device which allow when you use the cup to squeeze out juice and pulp, as it will be described later, the continual pouring of the worked product; between the handle ( y ) and the cup there is a suitable device ( δ ) which is both to block the cup, and to start the engine. It blocks the cup penetrating with a suitable stake, made of steal for example , into a corrisponding clutch made in the upper side of the casing of the food processor. It starts the engine switching a suitable control ( g ) which is on the lid ( see picture 6 ) to be put on the cup. The cup may be attached disattached indifferently from the right or from the left owing to the peculiar kind of attach ( h ) corrisponding to the one existing on the base (1) of the food processor, in the casing ( a ) of the engine; furthermore the cup has shape, in the upper lip, which follows the developing of a single ellixis, or more tracts of elli

xis ( $\beta$ ), which starting from " O " level reach the hemicir-cunference at "X" level to pass quickly at " O" level again and gradually reach " X" level at 180 degrees. On these hemi-circunferences some supporting planes ( $\gamma$ ) having different heights and placed along the lid rim ( see picture 6 ) to allow the lid to go down, if moved in one sense, and go up if moved the other way round. At the same time they allow the lid to remain ( during its rotation ) parallel to the cup base ( in picture 5 ) on which it is attached . On this lid the-re is a feed box ( 1 ) through which the food is introduced, and a funnel ( m) through which fluids are poured. In the fee-dbox (1) there is, if you need to press the food to be worked into the cup, a dosing pestle ( n ).

2) Now we are going to describe the appliance to squeeze juice or pulp or only juice fully out, with separation of the fully exploited slags. It consists of a cup ( F) see picture (13 and 5 ), the same used for the normal operations of the food processor ( to knead, to mince, to grate ect. ) and a lid ( see picture 7 ) containing a real new device ( p ) which if moved by a suitable notch ( q ) in a way by which it results tangent to the sense of movement, obtains the machanic pressure of the mash, previously crumbled by the disk ( r ) which is metallic or not, attached to lateral sides of the basket ( s ) in picture 8 . Further more the lid ( see pic-ture 7 ) has the same sealing closure between itself and the cup ( in picture 5-13 ) obtained through the suitable supporting planes at different heights and through the development of a hemicircunference moved of 180 degrees, on the rim of the cup. From the holes in the lateral sides of the basket come out both juice and pulp, this obtained thanks to a powerful pressure made by the ( p ) device. If it is driven in the opposite sense that is incident to the sense of movement, owing to its peculiar, helicoidal shape, it makes the mash convey to the center of the basket and toward the bottom instead of toward the top. Moving the ( p ) device with repeated and alternated movements, you will obtain the coming cut of all the juice and pulp. Through one or more springs made of material which has an elastic strain, you can assure youserl about the rest position of the device , when it is not moved. At last on this lid  there is a feed box ( z) to introduce the food; with its pestle to press the food on the disk ( r ) at the bottom of the basket ( see picture 8). Now we are going to describe an appliance to grind cereals, vegetables, coffee, dried fruits and any dried food ( see picture 9 ). It is composed of a cup ( compare 5 ) and a device divided in various parts:

1) grinding wheel ( A) attached to a support B to insert in the motor axle ( e);

2) Nut ( c ) with a stop device which takes place in the cylinder,  in which the support ( b ) of the grinding wheel (A) turns. The support has been attached to the motor axle and has a threading on the outer surface.

3) Funnel ( E) with, in the inside base, a grinding wheel (F) opposit to the rotating wheel (A). It is possible to regulate  the distance between them through the threading existing between ( C ) and ( E ). In the funnel there are same fissures possibly , oblique which make the grinded product pour in  the cup. Now we are going to describe an appliance to make candy flow ( picture 10 ). It consists of a support ( H) where there  are two electric poles, if you want to use the electric resistance ( L), controlled by a thermo-switch to melt sugar, and of a friction disk attached to the container ( N) which

- 11 - 0131548

alone, by thermo - switch, or with elettric resistance (L) makes sugar melt in the suitable rotating basket  with fissures and at the same time it ejects the sugar making it flow. Now we are going to describe the appliance to draw doughs ( see picture 11). It consists of the engine casing ( a ) on which is attached the device (P) which allows to use the motor in a position inclinad   90 degrees compared to a normal position. The movement is trasmitted to the reducer (Q) which trasmits it to the Archimedean screw (R) which conveys the dough, introduced in the feed box ( S) towards the screw cutting dies (T). Now we are going to describe the appliance to cleam and polish ( see picture 12 ). This device consists of the engine casing (a) of a flange ( U ) which is attached in the place  of the cup and which carries in the middle, a flexible arm ( V) to whose end are attached the tools , such as a flannel disk ( Z).

0131548

CLAIMS

1) Little electrical household appliance to help at home the making of food  that is: to mince, make kakes in general, to knead, to draw, to strain  tomatoes, to squeeze all the pulp out of fruit and vegetables, to grind to make candy flow and also help to clean , polish and brush. It consists of an engine casing ( picture 1 a ) with its relative tool box and a vane to store the electric wire ( V) patent request n.31620 B/83 6th-June-1983 a cup ( picture 5 f ) , patent request n. 42006 A/83 6th-June-1983,attachable to the engine casing ( a) rotating clockwise  and anticlokwise; a lid ( picture(6), patent request n. 42008 A/83 6th-June-1983, which rises when you open it, and lowers sealing when you cloce it. At the same time it controls, through a can through an articulated joint device, the switcher placed inside the engine casing blocking at the same time the cup to the engine casing through a little cylinder made of steal. It consists of a series of attachment swich allow different utilization of the appliance. The appliance is characterized by the fact that even if an induction engine is used, which has a single speed, it is possible to work every kind of food without changing speed and to obtain excellent results because it works at low speed without oxidize the enzymes of proteins and vitamines contained in the food. This is possible through two peculiar devices  that are the adjustable knife or blade ( picture 4 ) patent request n. 42005 A/83 6th -June- 1983, and the appliance for juices and pulp, ( picture 13 ) patent request n. 42009 A/84 1st -June -1984. The appliance is so charaterized by the adjustable knife ( through notches - picture 4 j ) by the appliance for juices and pulp which works both with centrifugal force and with mechanic pressure effect ( picture 7 p) and by the use of an induction engine ( long duration and great reliability )which does not need different or variable speeds because the aims of this change of speed are obtained through the peculiar attachments used.

2) We claim that to graduate the height of knife is, encreasing or decreasing the friction between knife and cup, to impress a more or lesswhireling motion to the food minute parts. The device is charaterized by obtaining this result both through variation of the knife height, through motches, or through a screw regulation system oe other devices suchas different thiknesseswhich make it possible to place the knife at different heights or through the usage of different knives which have different heights between the cutting surface and the bottom of the cup. In fact the regulation and the following work at different heights might be obtained whith two or three different knives, also made of different materials ( for example some of plastic , some of steal ) using that or those in the lower position to homogenize food or to whip cream, custard, white of eggs and those in the upper position to mince, cut, knead and mix.

3) Appliance , as in claims 1 or 2 , whose device to elaborate juices and pulp is charaterized by a basket ( 1 ) with conic shaped walls upside down, that is a basket with conic section having the lower base larger than the upper one.

4) Appliance as in claims 1÷2÷3 charaterized by a device (p) on the lid ( z) hand driven or with pneumatic or a electrical mechanic driving replaceable by a jet of air which allows through the continous pressure against the basket walls (1) and the shaking of the mash which is being elaborated , to obtain, despite the low speed, the full exploitation of the juice and the pulp, owing to the combined action of the centrifugal and mechanic force.

5) Claims as in points 1-2-3-4 also in the case in which the
appliance is made with expulsion devices for slags, juice and
pulp, working continually or in an alternate way, both in the
case in which the appliance is realized as an attachment of
food processor and in the case which it is realized as a single electric or hand driven appliance to squeeze juice out
of various vegetables and fruits or as tomatoes strainer.

6) While usually the disk to grate or cut vegetables only works
from one side, or if they work from both sides they are blocked
to the extension by screws or bolts, the disks of our new appliance are characterized by the possibility of being used
from both sides through a quick coupling (C) which allows the
disk to remain attached to the axle, owing to the blocking,
both while appliance is running and while the electronical
brake is used. The disks have same hubs ( $\varphi$ ) of different
height in a way which the cutting surfaces are always at the
same height compared to the lower rim of the feed box ( 1)
the quick coupling made on an extension ( picture 3 ) ending
with a polygonal shape, to make the disk rotate, has some
couplers or on the outer wall of the extension in the inner
side, or on the central peg of the extension. The quick coupling of the extension to the disk, is characterized by the
different segments forming the central peg, which can expand
and thighten, allowing the coupling on the hub of the disk.

7) The attachment of the food processor to make candy flow
consists of a plate which produces by friction or a plate
and a little resistance at low voltage. Both of them are pos-
sibily controlled by a thermostat: this attachment trasforms
the food processor in a appliance to make candy flow.

8) The device·to make spaghetti, doughs, bisquists ect. is characterized and consists  of a drawing machine which  works, that is coaxially to the gravity force. To allow this production, the appliance is to be inclined of 90 degress and to be put the supporting base of the drawing machine (T) so as allow the part from which the drawn comes out, protrude from the supporting plane.

9) The attachment to clean ad polish kitchen tools and other tools is characterized by the possibility to attach to the engine casing ( a) a flexible arm (V) also working in immersion. To its end are attached different tools such as brushes, disks, flannels, sponges, grinding wheels, which can rotate or work with alternating movement.

10) The device to be attached to be food processor to transform it in a grinding machine, to grind coffee,  spices, dried fruits , sugar, corn, mais, other cereals ad vegetables is characterized by  the absence of an engine because it works connected to the food processor one, and by its introduction inside the same food processor instead of the blade or the disks.

FIG 1

Fig. 2

Fig 3

0131548

Fig. 4

Fig. 6

Fig 5

Fig 7

Fig.8

0131548

Fig. 9

0131548

Fig. 10

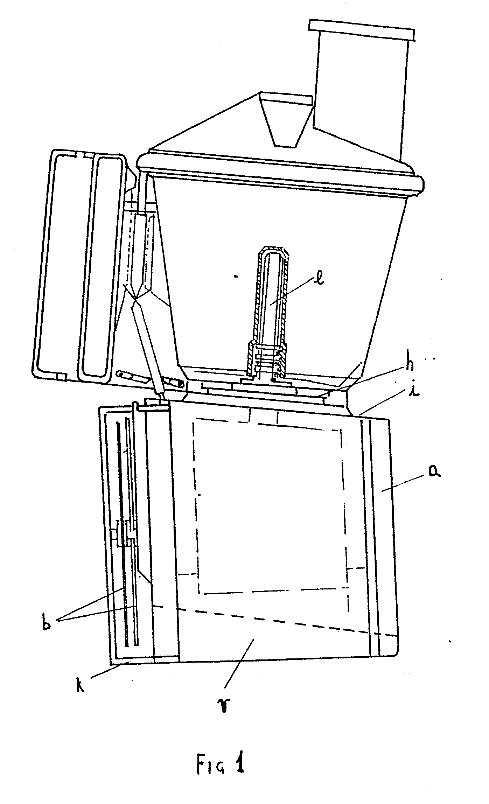

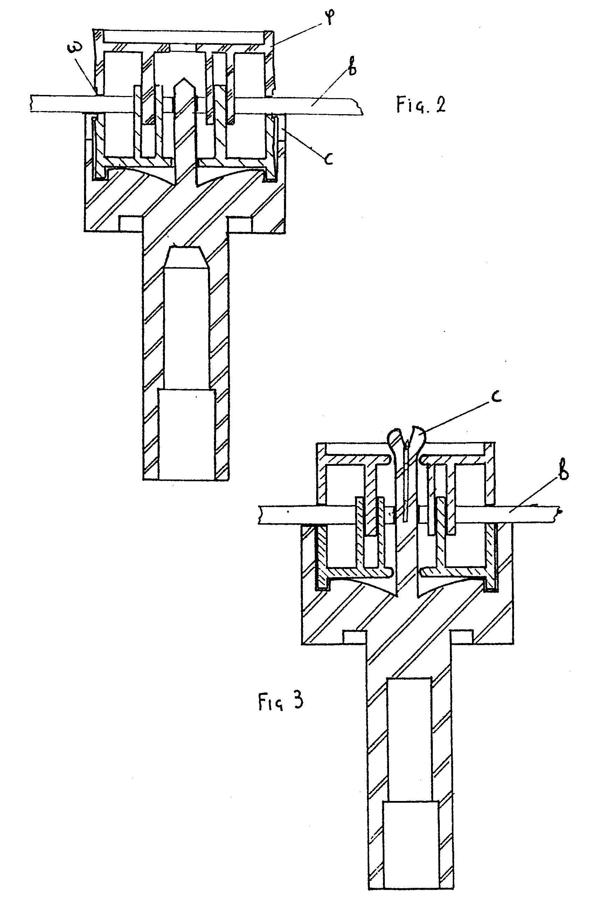

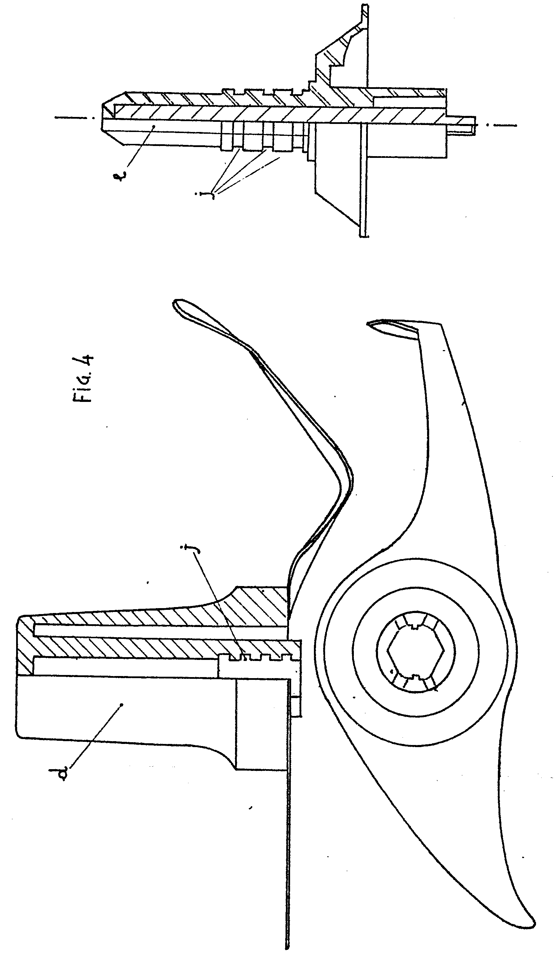

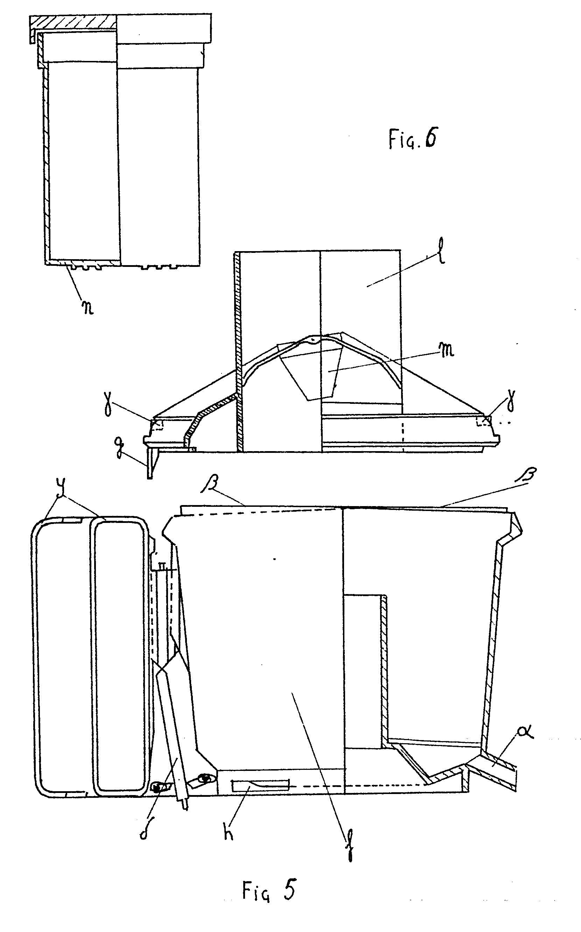

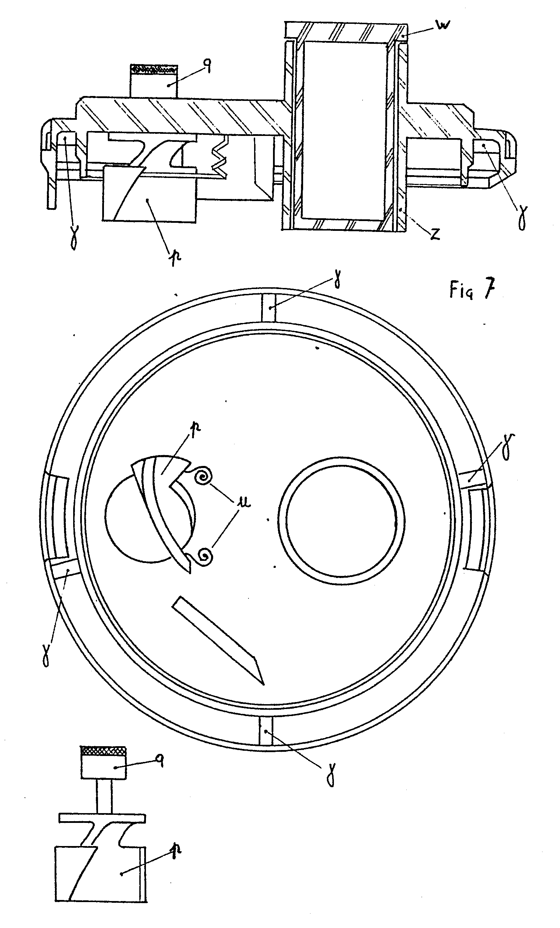

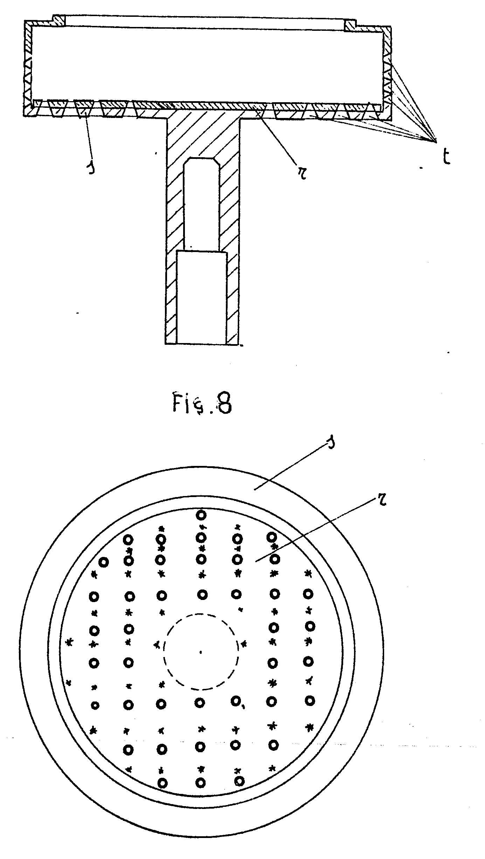

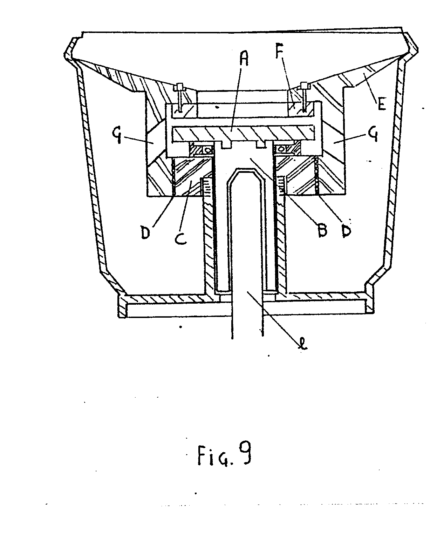

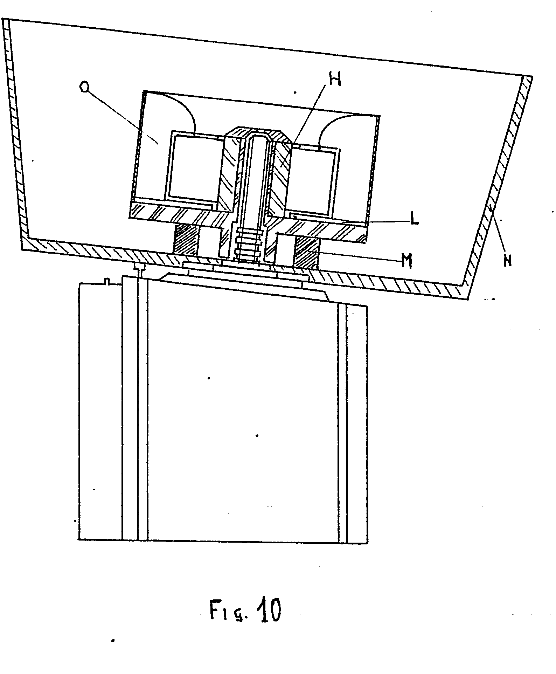

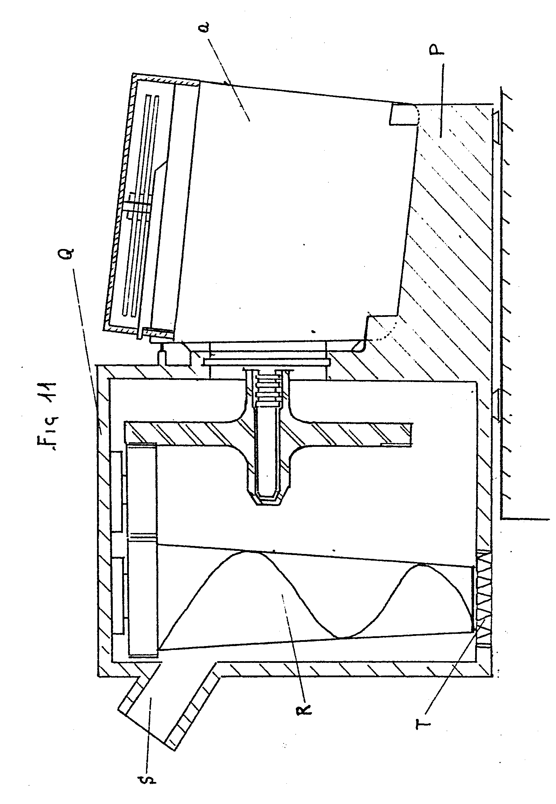

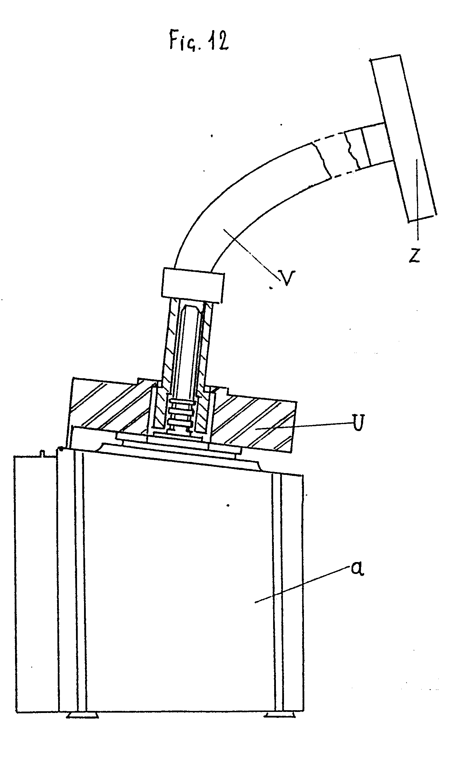

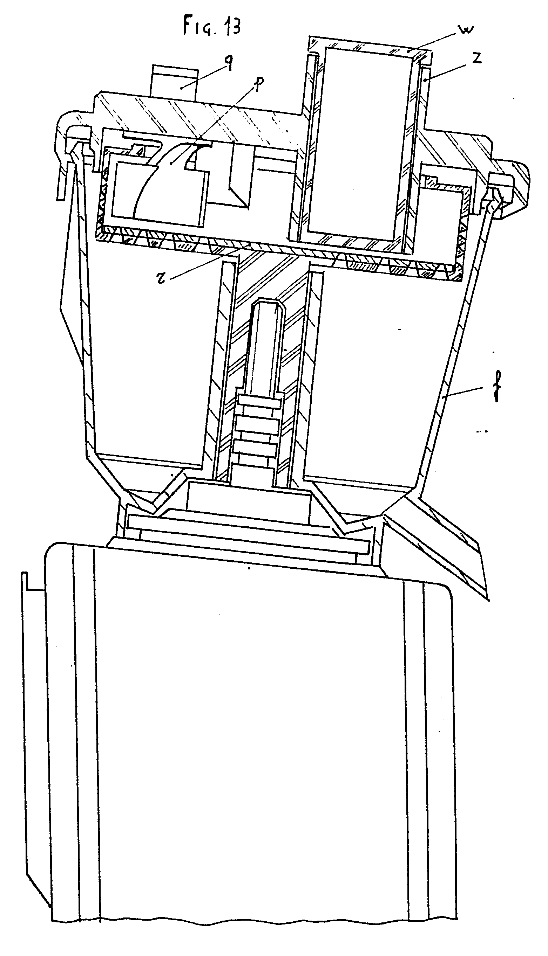

.Fig 11.

Q

S

R

T

a

P

Fig. 12

Fig. 13